# EUROPÄISCHE PATENTANMELDUNG

(11) **EP 1 674 319 A2**
(43) Veröffentlichungstag der Anmeldung: **28.06.2006**
(21) Anmeldenummer: 05026560.2
(22) Anmeldetag: 06.12.2005
(51) Int. Cl.: B60K 15/06

(54) **Tankanlage**

(30) Priorität: 22.12.2004 DE 102004061695
(71) Anmelder: DaimlerChrysler AG, 70567 Stuttgart (DE)
(72) Erfinder: Seifert, Jochen, 70619 Stuttgart (DE)

(57) **Zusammenfassung**

Die Erfindung betrifft eine Tankanlage mit mindestens zwei miteinander über eine Überström- oder Verbindungsleitung (3) verbundene Tankbehälter (1,2) zur Aufnahme von Flüssigkeiten, wobei einer der beiden Tankbehälter (1) einen Einfüllstutzen (5) zur Befüllung mit Flüssigkeit aufweist und wobei die Überström- oder Verbindungsleitung (3) einen Querschnitt aufweist, der derart bemessen ist, dass beim Befüllen der Tankanlage über den Einfüllstutzen (5) beide Tankbehälter (1,2) im wesentlichen synchron befüllt werden. Erfindungsgemäß reicht die Überström- oder Verbindungsleitung (3) an ihrem höchsten Punkt mindestens über den höchsten Füllstand des mit dem Einfüllstutzen (5) versehenen Tankbehälters (1) hinaus.

## Beschreibung

Die Erfindung betrifft eine Tankanlage mit mindestens zwei miteinander über eine Überström- oder Verbindungsleitung verbundene Tankbehälter zur Aufnahme von Flüssigkeiten nach dem Oberbegriff des Anspruchs 1.

Aus der DE 42 27 121 A1 ist eine Tankanlage für durch eine Brennkraftmaschine angetriebene Fahrzeuge bekannt. Die Tankanlage umfasst einen Haupttank und mindestens einen Zusatztank, deren Kraftstoffvorrat komplett nutzbar ist. Hierbei mündet eine Verbindungsleitung in den Haupttank und den Zusatztank in einem Abstand "a" zu deren Böden, wobei eine vom rückströmenden Kraftstoff angetriebene Strahlpumpe vorgesehen ist, deren Strahlpumpeneinlass mit der Rücklaufleitung, deren Strahlpumpenansaugöffnung mit dem Bodenbereich des Zusatztanks und deren Strahlpumpenauslass mit einer Rückströmleitung in Strömungsverbindung steht, die mindestens im Abstand "a" vom Boden des Haupttanks in denselben mündet, wobei die Ansaugöffnung der Ansaugleitung im Bodenbereich des Haupttanks angeordnet ist.

Um den Aktionsbereich von Kraftfahrzeugen, wie Personenkraftwagen, Nutzfahrzeuge etc. zu vergrößern, ist es bekannt, neben dem Hauptkraftstoffbehälter Zusatzkraftstoffbehälter vorzusehen; die miteinander verbunden sind, um im Bedarfsfall, z.B. im Langstreckeneinsatz, die Anzahl der Nachtankungen zu minimieren. Die Verbindung von Haupt- und Zusatzbehälter erfolgt üblicherweise dergestalt, dass die Tankbehälter an der tiefsten Stelle durch eine dünne Verbindungsleitung verbunden sind, so dass sich nach dem Prinzip der kommunizierenden Röhren in den Tankbehältern der gleiche Füllstand einstellt. Die Betankung selbst kann durch einen oder mehrere separate Tankstutzen erfolgen.
Nachteilig hierbei ist, dass die Verlegung dieser Verbindungsleitung "am tiefsten Punkt" der Tankbehälter, d.h. dicht über der Fahrbahn, diese Leitung stark gefährdet. Durch Überfahren von Hindernissen auf der Fahrbahn, bei Steinschlag oder anderen aufgeschleuderten Gegenständen oder bei Unfällen aufgrund der Massenträgheit der mit Kraftstoff gefüllten quer zum Fahrzeug verlaufenden voluminösen Leitung in Verbindung mit fehlender Abstützungsmöglichkeit in der Rahmenmitte kann diese Leitung leicht leckschlagen bzw. abreißen. Hierbei tritt Kraftstoff in die Umwelt aus und führt zu einem erhöhten Schadensrisiko.

Der Erfindung liegt als technisches Problem die Bereitstellung einer Tankanlage der eingangs genannten Art zugrunde, die mit vergleichsweise geringem Aufwand realisierbar ist und dabei das Risiko des Leckschlagens oder Abreißens weitgehend beseitigt.

Die Erfindung löst dieses Problem durch die Bereitstellung einer Tankanlage mit den Merkmalen des Anspruchs 1. Die erfindungsgemäße Tankanlage enthält mindestens zwei miteinander über eine Überström- oder Verbindungsleitung verbundene Tankbehälter zur Aufnahme von Flüssigkeiten. Hierbei weist einer der beiden Tankbehälter einen Einfüllstutzen zur Befüllung mit Flüssigkeit auf. Ferner weist die Überström- oder Verbindungsleitung einen Querschnitt auf, der derart bemessen ist, dass beim Befüllen der Tankanlage über den einen Einfüllstutzen beide Tankbehälter im Wesentlichen synchron befüllt werden können. Erfindungsgemäß reicht die Überström- oder Verbindungsleitung an ihrem höchsten Punkt mindestens über den höchsten Füllstand des mit dem Einfüllstutzen versehenen Tankbehälters hinaus.

Günstige Ausgestaltungen und Vorteile der Erfindung sind der Beschreibung sowie den weiteren Ansprüchen zu entnehmen.

Bei einer nach Anspruch 2 weitergebildeten Tankanlage umfasst die Überström- oder Verbindungsleitung ein Entlüftungsventil.

In einer alternativen Weiterbildung nach Anspruch 3 weist der Boden der jeweiligen Tankbehälter einen geodätisch tiefer liegenden Sammeltopf auf.

In einer bevorzugten Weiterbildung der Erfindung nach Anspruch 4 reicht die Überström- oder Verbindungsleitung bis zum tiefsten Punkt in jedem Tankbehälter.

In einer vorteilhaften Weiterbildung der Erfindung nach Anspruch 5 ist die Überström- oder Verbindungsleitung innerhalb der beiden Tankbehälter senkrecht von der geodätisch tiefsten Stelle durch die der geodätisch tiefsten Stelle gegenüberliegenden Seite durch den Tank hindurchgeführt.

Bei einer nach Anspruch 6 weitergebildeten Erfindung ist der höchste Punkt der Überström- oder Verbindungsleitung unmittelbar über dem Tankbehälter mit dem Einfüllstutzen angeordnet.

In einer bevorzugten Weiterbildung der Erfindung nach Anspruch 7 weist die Überström- oder Verbindungsleitung ein Gefälle vom Tankbehälter mit Einfüllstutzen zum weiteren Tankbehälter auf.

Im Folgenden wird die Erfindung anhand eines in der Zeichnung beschriebenen Ausführungsbeispiels näher erläutert. Die Zeichnung, die Beschreibung und die Ansprüche enthalten zahlreiche Merkmale in Kombination, die der Fachmann zweckmäßigerweise auch einzeln betrachten und zu sinnvollen weiteren Kombinationen zusammenfassen wird. Dabei zeigt in schematischer Darstellung:

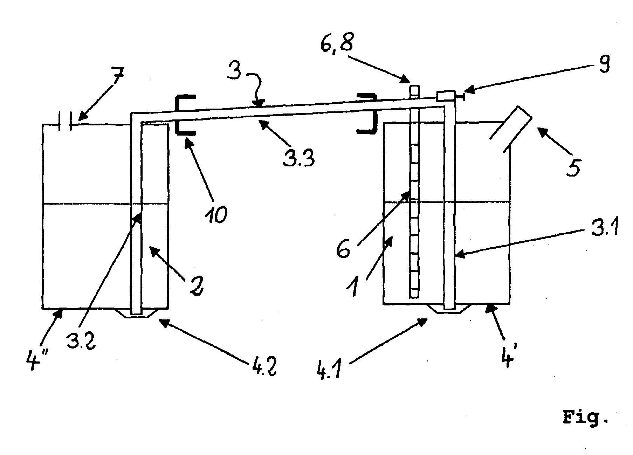

- Fig. 1: eine bevorzugte Ausführungsform der erfindungsgemäßen Tankanlage.

Kraftfahrzeuge, insbesondere Nutzfahrzeuge, die auf Langstrecken Einsatz finden, weisen häufig zwei und mehr Tankbehälter auf, um die Anzahl an Nachtankungen zu minimieren. Bei Pritschen- und Kofferfahrzeugen werden bedingt durch das längere Fahrgestell und den damit zur Verfügung stehenden größeren seitlichen Bauraum die beiden Tankbehälter auf einer Fahrzeugseite hintereinander angeordnet. Die Betankung erfolgt durch jeweils zwei separate Tankstutzen, die der Einfachheit halber auf einer Tankseite angeordnet sind. Bei Sattelzugmaschinen jedoch, die ein relativ kurzes Fahrgestell aufweisen, können die beiden Tankbehälter nur an den gegenüberliegenden Fahrzeugseiten angeordnet werden. Die Betankung erfolgt auch hier über zwei dem jeweiligen Tankbehälter zugeordneten Tankstutzen, die aber naturgemäß auf den beiden Fahrzeugseiten gegenüberliegend angeordnet sind. Für den Fahrer bedeutet dies zum einen eine nacheinander Betankung beider Tankbehälter, zum anderen muss der Fahrer den kompletten Lastzug rangieren, um an den anderen Befüllstutzen zu gelangen, da ein Hindurchfädeln der Zapfpistole mit Schlauch durch das Fahrgestell auf die andere Seite des Fahrzeugs aufgrund der kurzen Schlauchlängen an den Zapfanlagen ausscheidet. Dies führt daher zu einem nicht unwesentlichen Handlings- und Rangieraufwand für den Fahrer.
Um ein gleichzeitiges Betanken aller am Kraftfahrzeug, insbesondere am Nutzfahrzeug, montierten Kraftstoffbehälter über nur einen Tankstutzen zu gewährleisten, findet erfindungsgemäß eine Tankanlage Einsatz, welche mindestens zwei miteinander über eine Überström- oder Verbindungsleitung 3 verbundene Tankbehälter 1,2 zur Aufnahme von Flüssigkeiten enthält, wobei einer der beiden Tankbehälter 1 einen Einfüllstutzen 5 zur Befüllung mit Flüssigkeit aufweist und wobei die Überström- oder Verbindungsleitung 3 einen Querschnitt aufweist, der derart bemessen ist, dass beim Befüllen der Tankanlage über den Einfüllstutzen 5 beide Tankbehälter 1,2 im wesentlichen synchron befüllt werden. In Fig. 1 sind ein Haupttankbehälter 1 und ein Zusatzbehälter 2, eine Überström- oder Verbindungsleitung 3 mit zwei Steigrohren 3.1 bzw. 3.2, zwei Sammeltöpfe 4.1 bzw. 4.2 an den Tankbehälterböden 4' bzw. 4'', ein Tankeinfüllstutzen 5 am Haupttankbehälter 1, ein Tankgeber 6 mit integrierter Entlüftung 8 im Tankbehälter 1, eine Entlüftung 7 des Tankbehälters 2 und eine Entlüftungspumpe 9 zur Entlüftung der Überström- oder Verbindungsleitung 3 zu sehen. Beide Tankbehälter, sowohl der Haupt- 1 wie auch der Zusatztankbehälter 2, sind nahezu auf der gleichen Höhe angeordnet. Der Boden 4' bzw. 4" der jeweiligen Tankbehälter 1 bzw. 2 weist tieferliegende, nach außen gewölbte Sammeltöpfe 4.1 bzw. 4.2 auf, an deren tiefster Stelle die Steigrohre 3.1 bzw. 3.2 der Überströmleitung 3 enden. Um einen gleichmäßigen und raschen Füllstandsanstieg beider Tankbehälter 1, 2 beim Betankungsvorgang über nur einen Tankeinfüllstutzen 5, vorzugsweise am Haupttankbehälter 1, zu gewährleisten, sind die beiden Tankbehälter 1,2 über eine Überström- oder Verbindungsleitung 3 kommunizierend miteinander verbunden, dergestalt, dass die Überström- oder Verbindungsleitung 3 an ihrem höchsten Punkt mindestens über den höchsten Füllstand des mit dem Einfüllstutzen versehenen Tankbehälters 1 hinausreicht. Bevorzugt verläuft die Überström- oder Verbindungsleitung 3 im Bereich und auf dem Höhenniveau des Fahrzeugrahmens. Hierdurch ist die Leitung 3 in vorteilhafter Weise gegen Beschädigungen durch Steinschlag, Boden- oder Hindernisberührungen oder ähnlichem geschützt. Die Überströmleitung 3 umfasst zwei Steigrohre 3.1 und 3.2, welche fest in die jeweiligen Tankbehälter 1,2 eingebaut sind. Sie sind innerhalb der beiden Tankbehälter 1,2 senkrecht von der geodätisch tiefsten Stelle durch die der geodätisch tiefsten Stelle gegenüberliegenden Seite durch den Tank hindurchgeführt. Die Steigrohre 3.1 und 3.2 verlassen die Tankbehälter 1,2 über die jeweilige Tankoberseite, mit der sie vorzugsweise fest verschweißt sind. Die Steigrohre können wie auch die Tankbehälter aus Kunststoff, bevorzugt jedoch aus Metall, wie beispielsweise aus Stahl oder Aluminium, sein. Die Überströmleitung 3 umfasst ferner einen die beiden Steigrohre 3.1 und 3.2 verbindenden Teil 3.3, der bevorzugt ein flexibles, kraftstoff- und wärmebeständiges Material, wie beispielsweise ein kunststoff- oder kautschukartiges Material, enthält. Die flexible Überström- oder Verbindungsleitung 3 wird im Rahmen, insbesondere an den Rahmenlängsträgern 10 und den nicht gezeigten Querträgern mehrfach gehaltert. Hierdurch ist die Tankanlage auch gegen Unfallstöße und Beschädigung von unten sicher gelagert. Durch das flexible, die beiden Steigrohre 3.1 und 3.2 verbindende Teil 3.3 ist in vorteilhafter Weise eine Adaption auf verschiedene Tankanlagen und Bauräume auf einfache Art und Weise möglich.

Der höchste Punkt der Überström- oder Verbindungsleitung 3 ist unmittelbar über dem Tankbehälter 1 mit dem Einfüllstutzen 5 angeordnet, wobei die Überström- oder Verbindungsleitung 3 ein Gefälle vom Tankbehälter 1 mit Einfüllstutzen 5 zum weiteren Tankbehälter 2 aufweist. Die Länge der beiden Steigrohre 3.1 bzw. 3.2 sind unterschiedlich, wobei das im Tankbehälter 1 befindliche Steigrohr 3.1 eine größere Länge aufweist als das Steigrohr 3.2. Hierdurch wird mit einfachen Mitteln ein Niveauausgleich in beiden Tankbehältern 1,2 erreicht, so dass nur ein Tankgeber 6, welcher im Tankbehälter 1 angeordnet ist, benötigt wird. Damit ein rascher Füllstandsanstieg beider Tankbehälter 1,2 beim Betanken realisiert werden kann, sollte der Durchmesser der Überströmleitung 3 derart gewählt werden, dass die Überströmung des Kraftstoffes beim Füllstandsausgleich in einer Geschwindigkeit erfolgen kann, die mindestens der Durchflussmenge der Zapfanlagen entspricht. Bei einem an den Zapfanlagen beispielhaft anzunehmenden Volumenstrom von etwa 50 l/min, sollte der Durchmesser der Überströmleitung ≥ 30 mm gewählt werden.

Zur Entlüftung der beiden separaten Tankbehälter 1,2 bei Kraftstoffentnahme ist am Tankbehälter 2 eine Entlüftungseinrichtung 7 vorgesehen. Der Tankbehälter 1 enthält eine in den Tankgeber 6 integrierte, nicht gesondert dargestellte Entlüftungseinrichtung 8. Beide separate Entlüftungseinrichtungen 7,8 können auch durch eine gemeinsame, die Oberseiten der Tankbehälter 1,2 verbindende, nicht dargestellte Entlüftungsleitung ersetzt werden. Ferner kann die Entlüftung des Tankbehälters 2 in die Überströmleitung 3 integriert werden, so dass die am Tankbehälter 2 befindliche Entlüftungseinrichtung 7 günstigerweise eingespart werden kann.

Da das Prinzip des selbsttätigen Niveauausgleichs durch die Überströmleitung 3 nur dann optimal funktioniert, wenn zum einen die Steigrohre 3.1 bzw. 3.2 unterhalb des Flüssigkeitsspiegels der Tankbehälter 1,2 enden und zum anderen die Überströmleitung 3 komplett flüssigkeitsgefüllt ist, kann es unter bestimmten Umständen notwendig sein, die Überströmleitung 3 zu entlüften. Dies kann beispielsweise nötig sein, bei Inbetriebnahme der Tankanlage, wenn die Tankbehälter 1,2 so weit entleert wurden, dass ein Ende der Überströmleitung 3 "Luft gezogen" hat oder im Störungsfall nach der,Reparatur der Tankanlage.
Da durch den leicht ansteigenden Verlauf des die beiden Steigrohre 3.1 bzw. 3.2 verbindenden Teiles 3.3 die Luftblasen immer an den höchsten Punkt wandern, ist die Entlüftungsvorrichtung 9 am höchsten Punkt der Überström-oder Verbindungsleitung 3 unmittelbar über dem Tankbehälter (1) mit dem Einfüllstutzen 5 angeordnet. Die Entlüftung selbst kann manuell mittels Handentlüftungspumpe, durch druckluftunterstützte nach dem Venturi-Prinzip arbeitende Entlüftungsvorrichtung oder durch eine automatisch arbeitende Entlüftungseinrichtung erfolgen. Das Prinzip des selbsttätigen Niveauausgleichs findet auch bei Entleerung der beiden Tankbehälter 1,2 während des Verbrauchs beim Fahrbetrieb des Kraftfahrzeuges statt und gewährleistet auch bei der von der horizontalen abweichenden Schrägstellung des Fahrzeugs ein in beiden Tankbehältern 1,2 ausgeglichenes Niveau.

## Patentansprüche

1. Tankanlage mit mindestens zwei miteinander über eine Überström- oder Verbindungsleitung (3) verbundene Tankbehälter (1,2) zur Aufnahme von Flüssigkeiten, wobei einer der beiden Tankbehälter (1) einen Einfüllstutzen (5) zur Befüllung mit Flüssigkeit aufweist und wobei die Überström- oder Verbindungsleitung (3) einen Querschnitt aufweist, der derart bemessen ist, dass beim Befüllen der Tankanlage über den Einfüllstutzen (5) beide Tankbehälter (1,2) im wesentlichen synchron befüllt werden,
**dadurch gekennzeichnet,**
**dass** die Überström- oder Verbindungsleitung (3) an ihrem höchsten Punkt mindestens über den höchsten Füllstand des mit dem Einfüllstutzen (5) versehenen Tankbehälters (1) hinausreicht.

2. Tankanlage nach Anspruch 1,
**dadurch gekennzeichnet,**
**dass** die Überström- oder Verbindungsleitung (3) ein Entlüftungsventil (9) umfasst.

3. Tankanlage nach einem der vorangegangenen Ansprüche,
**dadurch gekennzeichnet,**
**dass** der Boden (4') bzw. (4") der jeweiligen Tankbehälter (1,2) einen geodätisch tiefer liegenden Sammeltopf (4.1) bzw. (4.2) aufweist.

4. Tankanlage nach Anspruch 3,
**dadurch gekennzeichnet,**
**dass** die Überström- oder Verbindungsleitung (3) bis zum tiefsten Punkt in jedem Tankbehälter (1,2) reicht.

5. Tankanlage nach einem der vorangegangenen Ansprüche,
**dadurch gekennzeichnet,**
**dass** die Überström- oder Verbindungsleitung (3) innerhalb der beiden Tankbehälter (1,2) senkrecht von der geodätisch tiefsten Stelle durch die der geodätisch tiefsten Stelle gegenüberliegenden Seite durch den Tank hindurchgeführt ist.

6. Tankanlage nach Anspruch 5,
**dadurch gekennzeichnet,**
**dass** der höchste Punkt der Überström- oder Verbindungsleitung (3) unmittelbar über dem Tankbehälter (1) mit dem Einfüllstutzen (5) angeordnet ist.

7. Tankanlage nach Anspruch 5,
**dadurch gekennzeichnet,**
**dass** die Überström- oder Verbindungsleitung (3) ein Gefälle vom Tankbehälter (1) mit Einfüllstutzen (5) zum weiteren Tankbehälter (2) aufweist.
